# EUROPEAN PATENT SPECIFICATION

(11) **EP 1 670 378 B1**
(45) Date of publication and mention of the grant of the patent: **24.11.2010**
(21) Application number: 04775384.3
(22) Date of filing: 07.09.2004
(51) Int. Cl.: A61C 5/08, A61C 13/083, A61K 6/02

(54) **METHOD AND ARRANGEMENT FOR A DENTAL INSTALLATION**
VERFAHREN UND ANORDNUNG FÜR EINE DENTALINSTALLATION
PROCEDE ET DISPOSITIF POUR IMPLANTATION DENTAIRE

(30) Priority: 24.09.2003 SE 0302539
(43) Date of publication of application: 21.06.2006
(73) Proprietor: Nobel Biocare Services AG, 8058 Zürich-Flughafen (CH)
(72) Inventor: ADILSTAM, Fredrik, S-181 33 Lidingö (SE); IVERHED, Mattias, S-741 91 Knivsta (SE)
(74) Representative: Byström, Kurt Linus
(86) International application number: PCT/SE2004/001279
(87) International publication number: WO 2005/027771

(56) References cited:
- EP-A1- 1 025 829
- WO-A1-95/35070
- WO-A1-99/50480
- DE-A1- 4 114 792

## Description

The present invention relates inter alia to a method for a ceramic substrate which is included in or forms a unit which can consist, for example, of an implant, spacer, crown, etc., in a dental installation. The invention also relates to an arrangement in the form of a ceramic substrate of said type.

It is already known in dentistry to produce implants, crowns, spacers, etc., made of titanium with porous surface layers which have advantages when applied in or to bone substance, in dental installations, etc. It has been proposed that the porous surface layers be arranged mainly on structures made of titanium, and reference may be made in this connection, inter alia, to patents SE 514202 and SE 516282 obtained by the same Applicant as is filing the present patent application.

Reference is also made to the technique which is now generally known on the open market where the products provided by the same Applicant go under the trade name TiUnite, and which indicate possibilities of creating and using layers with excellent porosity on titanium components in dentistry. Examples which may be mentioned are crater-like structures with porosities of the order of 2 - 15 µm, for example 3 - 6 µm. The porosity can be used as a depot for different kinds of substances, for example growth-stimulating substances, anti-inflammatory substances, etc. The porosity per se is also advantageous for the actual incorporation of the implant in the jaw bone.

There is a particular need for ceramic products to be able to be produced with the same excellent porosity on the surfaces, for example on implant surfaces and spacer surfaces, and also on threads of the implant or spacer. However, there have been serious technical difficulties in being able to obtain porosities on ceramic products which correspond to those found on metal products and which, for example, are intended to withstand the forces and moments which are formed or arise, for example, when screwing implants into holes formed in the jaw bone. In the case of crowns, for example, there is also a need to use cement to obtain considerable retention or fixing between the actual components of the installation. The present invention has the object of solving these problems, among others.

It is also important to be able to vary the thicknesses of the porous layers and their extents across the actual surface and the composition of the actual dental product. It is also desirable to be able to vary the degree of porosity and the distribution of the pores forming the porosity across the extent of the respective surface. The invention provides a solution to this problem too.

It should be noted that it is generally already known, outside the field of dentistry, to provide ceramic substrates with porous outer layers. However, it has been found that the technique used outside the field of dentistry cannot be transposed to the dental field without extensive rethinking, mainly on account of the demand for high porosity and precision in dentistry. Thus, for example, it is already known to produce porous ceramic layers in which ZrO₂ is used with Y₂O₃ in casting processes. Three different particles can be used to form pores, namely graphite, PMMA and NiO particles. The first two types of particles can be easily burnt off, while NiO has to be leached with acid. Reference may be made to the article "Synthesis of highly porous yttria-stabilized zirconia by tape casting methods".

Another technique used outside the dental field is to form porous ceramic products with starch compositions, so-called starch forming. In these compositions, use is made of the possibility that the starch filled with water and moisture swells when it is heated above a certain temperature. The swelling forces the formation of a porous network, which creates a certain stability in the material. When the material is burned, a porous body is obtained. The starch particles can also be used as pore formers in accordance with the above. This method relates mainly to porosities extending completely through the product, which in general are not relevant in dentistry. The method is described in, inter alia, J. Am. Ceram. Soc. 86[3] 395-400 (2003); and "Processing of porous ceramics by a new direct consolidation technique", J. Eur. Ceram. Soc. 1998, 18, 131-140.

A completely different technique used outside the dental field for the purpose of forming porous material would be to use zirconium parts with a large particle size. The greater the particle size, the larger the space obtained between the particles. A subsequent sintering thus will not be able to eliminate all pores when the ceramic particles are chosen with a large size. The porosity in the substrate preferably has a smaller size and the sintering will therefore eliminate the last-mentioned porosity. WO 99/50480 discloses a method for electrophoretic deposition of ceramic particles as a green body shaped as a dental appliance. The invention is defined by independent claims 1 and 11.

According to a method, inter alia, the substrate, at least at a portion bearing a surface, is provided with a first porosity, and that, in order to form a ceramic layer with a second porosity having pore sizes and/or pore numbers preferably exceeding the first porosity, a dispersion (suspension) of a preferably low-viscosity liquid is applied to the surface, said liquid having the ability to be sucked by capillary force into the first porosity or pore formation and, in a first stage, to retain on or against the surface material and/or liquid particles which do not penetrate into this first porosity and <> which contribute to the continued construction of the layer. In a second stage, the substrate is subjected to sintering in which the particles finally forming the layer are held together with intermediate spaces which consist of or are included in the second porosity, the spaces being formed either by the fact that material and liquid particles separate from the particles finally forming the layer are driven off during the sintering and/or by the fact that the particles forming the layer are chosen with a particle size which means that the last-mentioned particles are held together after the sintering despite the intermediate spaces.

In one embodiment, the particles are allocated a size and/or shape determining the pore formation, and the particles thus forming as pore formers are chosen to be or are insoluble in the liquid included in the dispersion. The particles for forming the dispersion are dispersible in the liquid with or without dispersants, and the particles can be easily driven off, by means of a removal function, for example burning in a furnace and/or etching and/or leaching and/or smelting and/or sublimation and/or dissolving. The particles are arranged or chosen to show a low residual degree of impurity after the removal function has been performed.

In a proposed embodiment, use is made of polycrystalline zirconia, alumina and/or hydroxyapatite mixed into the dispersion. As pore formers, it is possible to use particles of, for example, graphite with sizes in the range of 0.1 - 100 µm, preferably in the range of 0.3 - 50 µm. The range of 0.5 - 10 µm is of special interest. In addition, or alternatively, starch with particle sizes in corresponding ranges can be used. Said graphite and starch particles thus form the particles which are separate from the particles forming the layer. The substrate can be presintered to form the first porosity, and an emulsion used can be an acrylic polymer emulsion with liquid particles which are driven off in said second stage. In a further alternative, particles, for example of zirconia, alumina and/or hydroxyapatite can be admixed with the dispersion, these having a particle size which, after sintering, gives residual porosity. Water-soluble ammonium sulfate or polycarboxylate can be used for example as dispersant. Water and/or alcohol for example can be used as the low-viscosity liquid. The thickness, extent and composition of the layer can be varied within wide limits. Further embodiments are set out in the dependent claims relating to the novel method.

According to an arrangement, the substrate/arrangement, at least at a portion bearing a surface, has the ability to exhibit in an initial stage a first porosity or pore formation, and in that the surface bears a ceramic layer applied by means, inter alia, of sintering and with a second porosity having larger and/or more pores than in the first porosity. The last-mentioned porosity is arranged, before sintering of the layer, to have the ability to receive, by capillary force, a low-viscosity liquid and at the surface to cause the retention of particles dispersed in the liquid which contribute to the formation of the layer. In addition, the construction of the layer is based on driving off by means of sintering the particles forming intermediate spaces, or in that the particles which form the layer have a particle size permitting the formation of intermediate spaces despite the sintering. In one embodiment, the last-mentioned particles can be of the same type as the substrate.

By means of what has been proposed above, dental products can be produced. The products in question can, for layer application, be immersed in a dispersion and, after the immersion, the product/blank/structure can be worked in order to remove excess. After drying, the coated cylinders or implants can be sintered with the layers thus applied. Even threaded implants can be coated and treated in a corresponding manner. This shows that said presintering gives advantageous results with good layer coating. The presintering can take place, for example, at 1200°C, for, for example, 2 hours before the layer coating is started. In the case of spacers and crowns, for example, the second porosity increases the base for cementing intended to hold the components in the installation together.

Presently proposed embodiments of a method and an arrangement will be described below with reference to the attached drawings, in which:
- Figure 1: shows symbolically, in a vertical view, parts of a unit consisting of an implant, crown, spacer, etc., coated with a layer of high porosity,
- Figure 2: shows symbolically, in a vertical view, the sintering method on the implant with associated layer,
- Figures 3-8a: show different constructions of porous layers which have been produced by different methods, and
- Figure 9: shows, in diagram form, a sintering cycle in a furnace.

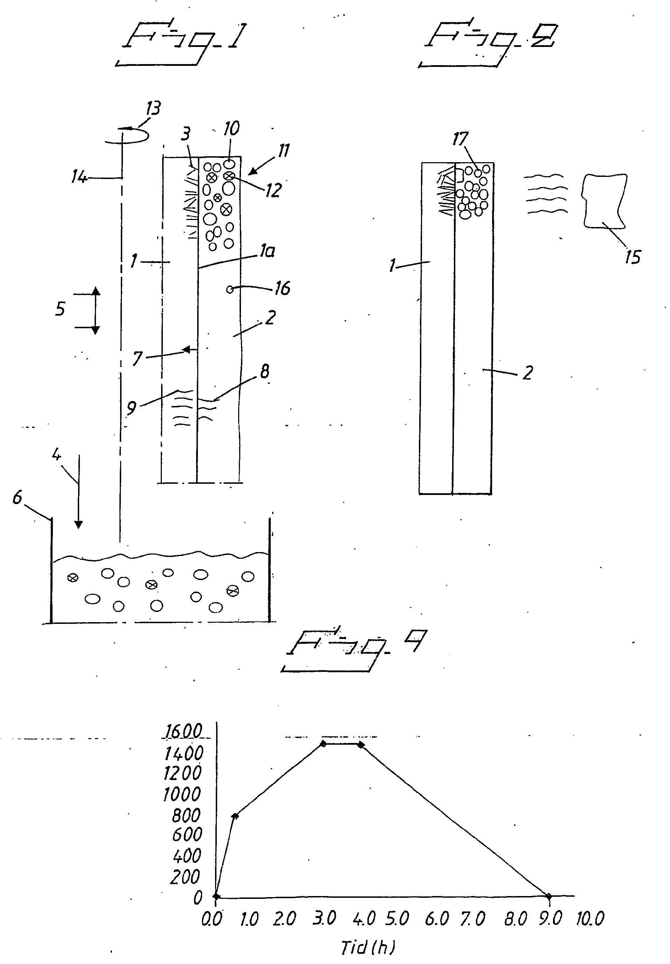

In Figure 1, a unit is shown symbolically by reference number 1. According to the above, the unit can consist, for example, of an implant known per se, a spacer known per se, etc. The unit has a surface 1a which is to be coated completely or partially with a layer 2 of ceramic material of high porosity. The implant or equivalent is pre-sintered and has a first porosity 3 at least at said surface 1a, i.e. the implant can have a continuous porosity or it can have a densely sintered core with an outer layer formation which has said first porosity. On application of the layer 2, a dispersion 4 is used which is applied to said outer surface 1a by immersing the unit 1, see arrow 5, in a bath 6 of said dispersion. The application can alternatively be carried out by dripping, spraying, etc. The application means that a capillary force, which is indicated symbolically by 7, can come into play. The capillary force is generated by or with the first porosity 3 and means that liquid 8 is sucked into the porosity completely or partially. Thus, in the figure, liquid sucked into the porosity 3 is indicated by 9. The liquid 8 can penetrate with a complete degree of saturation into the porosity 3 or with a partial degree of saturation. The capillary force 7 means that the particles 10 and 12 which form layer 11 are retained on the surface 1a. The dispersion contains first particles 10 which are to form the final layer indicated by 17. In addition, particles 12 are included which can be driven off by subsequent sintering. In connection with the application, the unit can be rotated in the direction of the arrow 13 about its longitudinal axis 14. A characteristic of the particles 10 and 12 is that they are of such a size that they cannot penetrate to any great extent, or do not penetrate at all, into the first porosity 3.

Figure 2 shows, symbolically, the sintering of the layer 2 with a sintering unit indicated symbolically by 15. In this sintering method, both the liquid 9 and the removable particles 12 are driven off. As an alternative, liquid particles 16 in an emulsion can be included instead of or in combination with the particles 12, which liquid particles can be driven off or burnt off similarly to the particles 12. In Figure 2, the pore formation is indicated by 17.

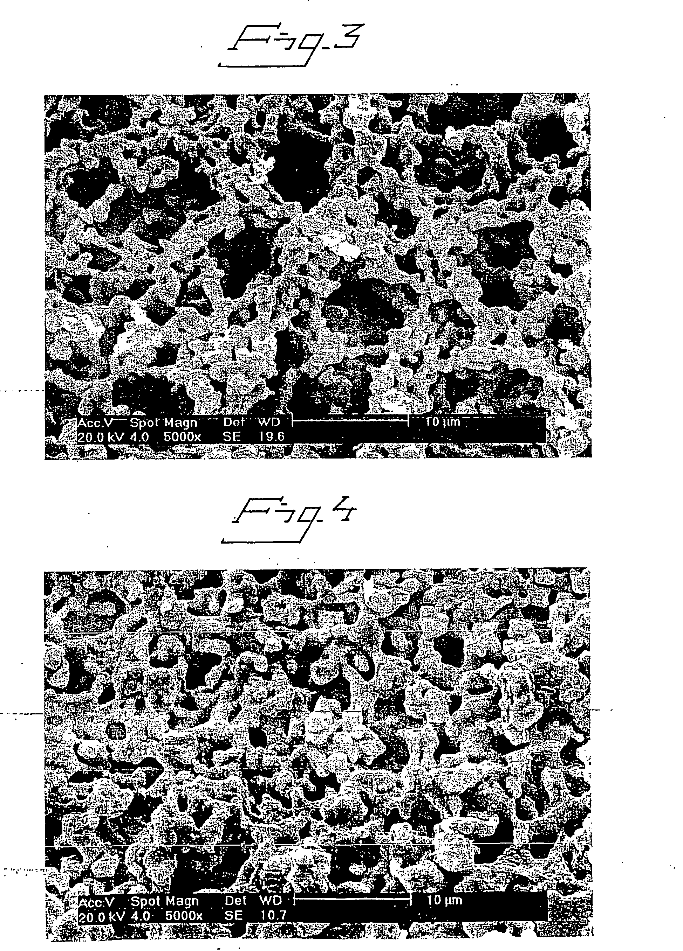

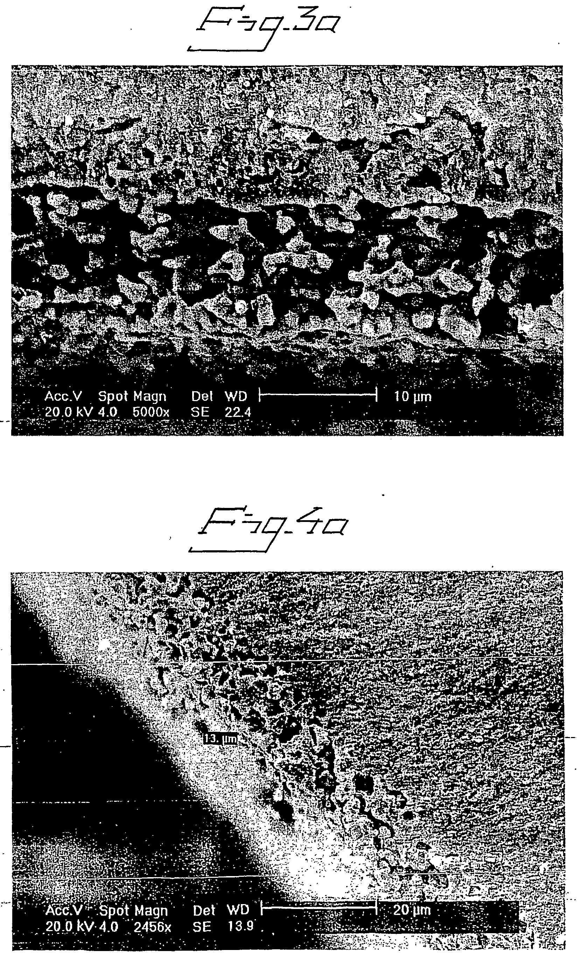

The different pore formers produced different porosities, as can be seen from Figures 3-8a which show porous surfaces on ceramic implants.

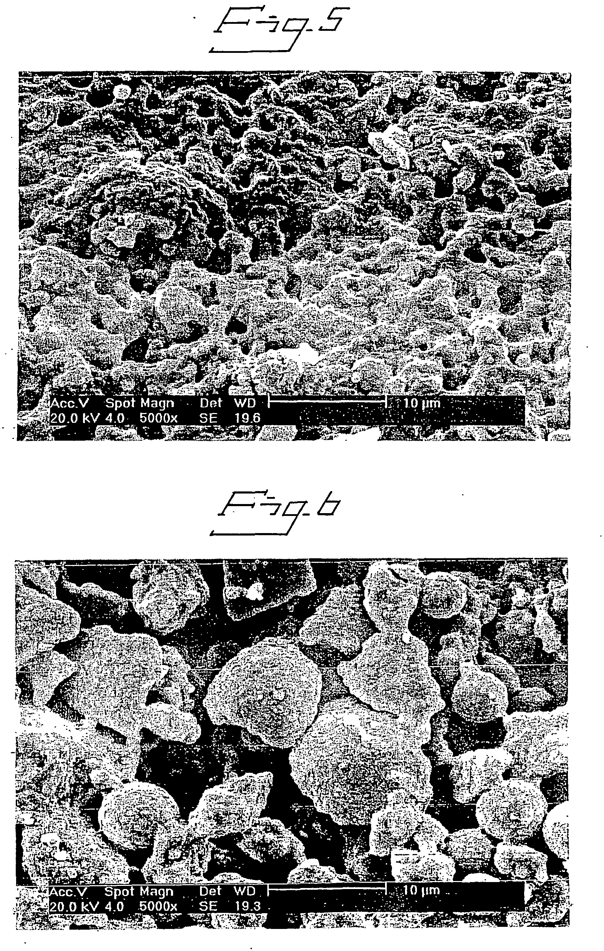

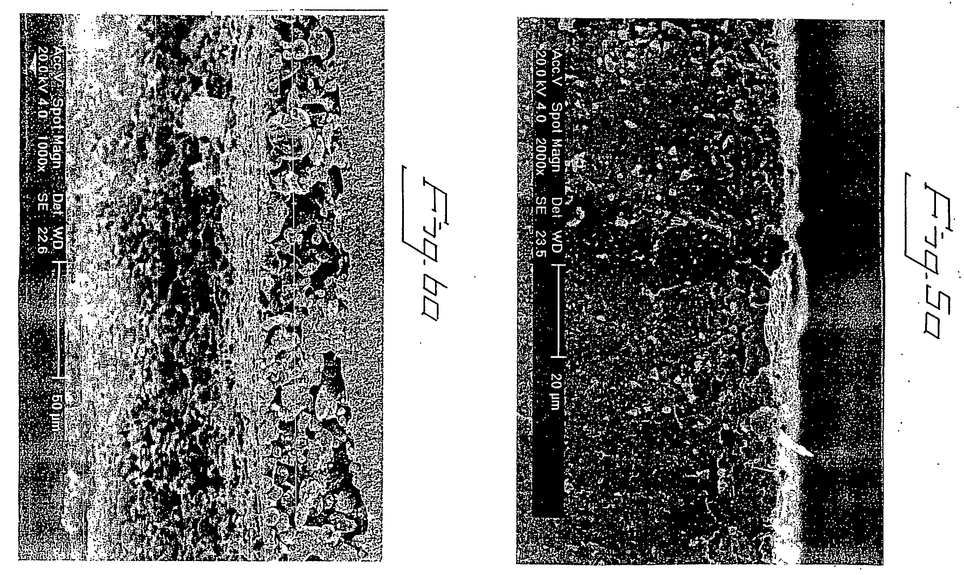

Figures 3-3b show a slurry with 50% by volume of graphite particles, and a particle content of 5% by volume. Figures 4-4a show a slurry with 50% starch particle and a particle content of 5%. Figures 5-5a show the case with 50% binder in the slurry and with a particle content of 5%. Figures 6 and 6a show coarse particles, with a particle content of 10% by volume.

Figures 3, 4, 5 and 6 show the views at right angles to the surface, and 3a, 4a, 5a and 6a show the views at right angles to the fracture surface. Measurements have been carried out on the different layers and it appears that a reduction of the particle content increases the layer thickness.

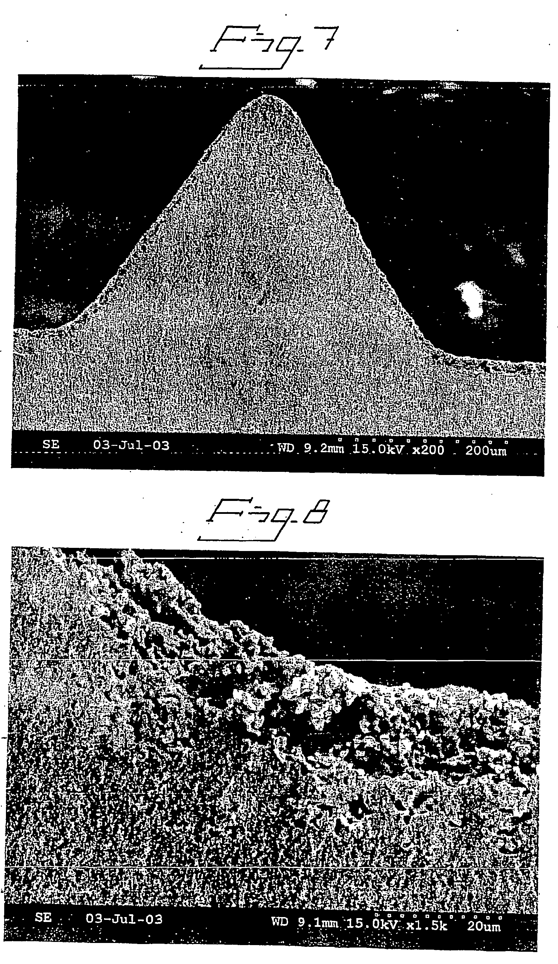

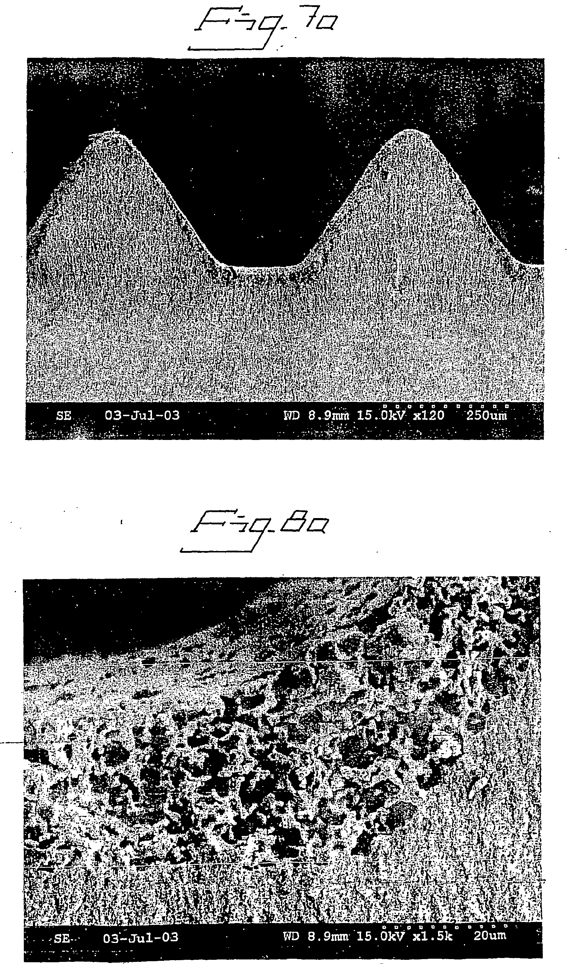

Figures 7-8a show cases of layer formation on a threaded implant. Figures 7 and 8 show the use of 50% by volume of graphite as pore former, and the figures show the use of starch as pore former. Figures 8 and 8a are on a larger scale than 7 and 7a.

The components can be sintered in the production and the implants in a furnace. A sintering cycle is shown in Figure 9.

Components have been produced and tested in accordance with the following examples.

### Example 1

Reference is made to Figures 3 and 3a. A presintered, porous substrate in the form of a cylinder is produced from a commercially available yttrium-stabilized zirconia (Tosoh TZ-3YS-E). The implant was immersed in a dispersion which consisted of zirconia, a pore former of graphite, a dispersant and de-ionized water. The zirconium particles (TZ-3YS-E from Tosoh Corporation) had a mean particle size of ca. 0.3 µm. The graphite particles had a particle size of between 1 and 6 µm. The dispersant used was Duramax B3005 from Rohm and Haas which is a water-soluble ammonium salt of a polycarboxylate. The content of dispersant was 0.5 percent by weight. The dry content used was 5 percent by volume, the content of graphite particles in turn being 50 percent by volume.

After the immersion, the cylinder was rotated at 4500 rpm so that the excess of dispersion was removed from its surface. Subsequent sintering at 1500°C and for 2 hours in an air atmosphere gave a porous layer with a thickness of ca. 20 µm.

### Example 2

Reference is made to Figures 4 and 4a. A cylinder which in accordance with Example 1 has been immersed in a dispersion consisting of zirconia, a pore former of starch, a dispersant and de-ionized water was used. The zirconia particles in the dispersion corresponded to those used in Example 1. The starch particles had a particle size of between 3 and 6 µm (Remy DR, Remy, Belgium). The dispersant in Example 1 was used. The dry content used in the dispersion was 5 percent by volume, and the starch content was 50 percent by volume of the dry substance.

Immersion and the sintering method according to Example 1 gave a porous layer with a thickness of ca. 13 µm, cf. Figures 4 and 4a.

### Example 3

Reference is made to Figures 5 and 5a. A cylinder corresponding to that in the example was immersed in a dispersion consisting of zirconia, a binder emulsion, a dispersant and de-ionized water. The zirconium particles in the dispersion corresponded to that used in Example 1. The emulsion was an acrylic polymer emulsion from Rohm and Haas, Duramax B1000. The dry content here was 5 percent by volume, and the binder content was 50 percent by volume of the dry substance.

Immersion and the sintering method according to Example 1 gave a porous layer with a thickness of ca. 15 µm.

### Example 4

Reference is made to Figures 6 and 6a. A cylinder corresponding to the one in Example 1 was immersed in a dispersion consisting of zirconia particles, a dispersant and de-ionized water. The zirconium particles in the dispersion were coarser than those used in the production of the substrate, approximate particle size of between 7 and 10 µm. The dispersant used in Example 1 was also used here. The dry content here was 10 percent by volume.

Immersion and the sintering method according to Example 1 gave a porous layer with a thickness of ca. 40 µm.

### Example 5

Reference is made to Figures 7 and 7a. A pre-sintered (1000°C), porous substrate in the form of a threaded implant was made from a commercially available yttrium-stabilized zirconia (Tosoh TZ-3YS-E). The implant was immersed in a dispersion which consisted of zirconia, a pore former of graphite, a dispersant and de-ionized water. The zirconium particles (TZ-3YS-E from Tosoh Corporation) had a mean particle size of ca. 0.3 µm. The graphite particles had a particle size of between 1 and 6 µm. The dispersant used was Duramax B3005 from Rohm and Haas which is a water-soluble ammonium salt of a polycarboxylate. The dispersant content was 0.5 percent by weight. The dry content used was 5 percent by volume, the content of graphite particles in turn being 50 percent by volume.

After the immersion, the threaded implant was rotated at 4500 rpm so that the excess of dispersion was removed from its surface. Subsequent sintering at 1500°C and for 2 hours in an air atmosphere gave a porous layer with varying thickness; in the thread parts the thickness was ca. 30 µm, while the layer thickness at the thread crests was only a few micrometers. Between top and bottom, the thickness was ca. 5 µm. Compare also Figure 9.

### Example 6

Reference is made to Figures 8 and 8a. An implant according to Example 5 was immersed in a dispersion consisting of zirconia, a pore former of starch, a dispersant and de-ionized water. Zirconium particles and dispersant according to Example 1 were also used here. The starch particles corresponded to those in Example 2. The dry content used in the dispersion was 5 percent by volume, and the starch content was 50 percent by volume of the dry substance.

The immersion and sintering method according to Example 1 gave a porous layer with a thickness of ca. 25 µm in the thread parts, while the crests had a thickness of ca. 5 µm.

A modification of the above method is to use, for formation of a ceramic layer, a substrate whose surface is of such a nature that it lacks the ability to suck liquid up by capillary force. Such a surface can be obtained, for example, by sintering of the abovementioned pre-sintered substrates. Application of the earlier suspension, with graphite as pore former for example, can be carried out, for example, by dripping, spraying and/or immersion. Since in these cases it is not possible to use a capcity of the liquid to penetrate in order to create the ceramic layer, the liquid phase in the dispersion must be removed in some other way, for example by drying.

## Claims

1. A method for forming a unit (1) for a dental installation, for example an implant, a spacer, a crown, comprising:
providing a ceramic substrate, having at least a portion bearing a surface (1a) provided with a first pore formation having a first porosity (3),
applying a dispersion (4) comprising a viscous liquid, ceramic particles (10), and material particles (12) and/or liquid particles to the surface, said viscous liquid having the ability to be sucked by capillary force into the first pore formation or to dry in order to form a ceramic layer (2) with a second porosity having larger pores than in the first porosity (3) ,
retaining, in a first stage, on the surface, said material and/or liquid particles which have a size so that they do not penetrate into the first pore formation and which contribute to the continued construction of the ceramic layer (2),
sintering the substrate, in a second stage, whereby the particles finally forming the layer are held together with intermediate spaces which consist of or are included in the second porosity, and
driving off said material and/or liquid particles during the sintering.

2. The method according to claim 1, wherein the ceramic particles (10) are of the same type as the substrate.

3. The method according to claim 1 or 2, wherein the particles have a size or shape determining the second porosity and are insoluble in the viscous liquid.

4. The method according to claim 3, wherein the material particles are dispersible in the liquid with or without dispersant, whereby the particles are driven off by means of a removal function, comprising at least one of: burning in a furnace; etching; leaching; melting; sublimation; and dissolving.

5. The method according to any one of the previous claims, wherein the substrate (1) is presintered in order to form the first porosity, and in that the ceramic particles (10) comprise at least one of: zirconia, alumina and hydroxyapatite, and the ceramic particles have sizes in the range of 0.1 - 1.0 µm, preferably 0.2 - 0.6 µm.

6. The method according to any one of the previous claims, wherein the material particles consist of graphite particles or starch particles and have sizes in the range of 0.1 - 100 µm, preferably 0.3 - 50 µm, such as 0.5 - 10 µm.

7. The method according to any one of the previous claims, further comprising presintering of the substrate to form the first porosity.

8. The method according to any one of the previous claims, wherein said liquid particles comprises an emulsion, such as an acrylic polymer emulsion with liquid particles, which are driven off in said second stage.

9. The method according to claim 1, **characterized in that** the substrate is pre-sintered to form the first porosity, and **in that** particles of zirconia, alumina or hydroxyapatite are mixed into the dispersion and have such a size that the porosity remains after sintering.

10. The method according to any one of the previous claims, further comprising
applying said dispersion to the surface of the substrate by means of a method included in the group:
dripping, spraying and immersion.

11. The method according to any one of the previous claims, wherein the viscous liquid is water or alcohol.

12. An arrangement for a dental installation, for example implant, spacer/spacer sleeve, crown, etc., made completely or partially of a ceramic substrate, wherein the substrate, at least at a portion bearing a surface, comprises a first pore formation having a first porosity, **characterized in that in that** the surface (1a) comprises a sintered ceramic layer (2) comprising ceramic particles (10) and with a second porosity having larger pores than in the first porosity.

13. The arrangement according to claim 12, **characterized in that** the ceramic layer (2) comprises particles of zirconia, alumina or hydroxyapatite.

14. The arrangement according to claim 12 or 13, **characterized in that** the ceramic particles (10) have a size, which is larger than the porosity of the substrate.

15. The arrangement according to claim 12 or 13 , **characterized in that** the ceramic particles (10) are zirconium particles having a mean particle size of 0.3 µm.

16. The arrangement as claimed in claim 15, **characterized in that** the thickness of the layer (2) is ca. 20 µm.

17. The arrangement as claimed in claim 12, **characterized in that** the ceramic particles (12) are zirconium particles having a particle size of between 7 and 10 µm.

18. The arrangement as claimed in claim 17, **characterized in that that** the thickness of the layer (2) is ca. 40 µm.

## Patentansprüche

1. Verfahren zum Bilden einer Einheit (1) für eine Dentalinstallation, zum Beispiel ein Implantat, einen Abstandshalter, eine Krone, das folgendes umfasst:
Vorsehen eines keramischen Substrats, das mindestens einen Teil aufweist, der eine Oberfläche (1a) trägt, die mit einer ersten Porenbildung mit einer ersten Porosität (3) versehen ist,
Aufbringen einer Dispersion (4), die eine viskose Flüssigkeit, Keramikteilchen (10) und Materialteilchen (12) und/oder Flüssigkeitsteilchen umfasst, auf die Oberfläche, wobei die viskose Flüssigkeit die Fähigkeit aufweist, durch Kapillarkraft in die erste Porenbildung aufgesaugt zu werden oder zu trocknen, um eine Keramikschicht (2) mit einer zweiten Porosität, die größere Poren als in der ersten Porosität (3) aufweist, zu bilden,
Beibehalten, in einer ersten Stufe, auf der Oberfläche, der Material- und/oder Flüssigkeitsteilchen, die eine Größe aufweisen, so dass sie nicht in die erste Porenbildung eindringen, und die zu dem fortgesetzten Aufbau der Keramikschicht (2) beitragen,
Sintern des Substrats, in einer zweiten Stufe, wodurch die Teilchen, die schließlich die Schicht bilden, mit Zwischenräumen zusammengehalten werden, die aus der zweiten Porosität bestehen oder darin eingeschlossen sind und
Austreiben der Material- und/oder Flüssigkeitsteilchen während des Sinterns.

2. Verfahren gemäß Anspruch 1, wobei die Keramikteilchen (10) von derselben Art wie das Substrat sind.

3. Verfahren gemäß Anspruch 1 oder 2, wobei die Teilchen eine Größe oder Form aufweisen, welche die zweite Porosität bestimmt, und in der viskosen Flüssigkeit unlöslich sind.

4. Verfahren gemäß Anspruch 3, wobei die Materialteilchen in der Flüssigkeit mit oder ohne Dispergiermittel dispergierbar sind, wodurch die Teilchen mittels einer Entfernungsfunktion ausgetrieben werden, die mindestens eine der folgenden umfasst: Brennen in einem Ofen; Ätzen; Auslaugen; Schmelzen; Sublimation; und Auflösen.

5. Verfahren gemäß einem der vorhergehenden Ansprüche, wobei das Substrat (1) vorgesintert wird, um die erste Porosität zu bilden, und wobei die Keramikteilchen (10) mindestens eines der folgenden umfassen: Zirkoniumoxid, Aluminiumoxid und Hydroxyapatit, und die Keramikteilchen Größen in dem Bereich von 0,1 - 1,0 µm, bevorzugt 0,2 -0,6 µm aufweisen.

6. Verfahren gemäß einem der vorhergehenden Ansprüche, wobei die Materialteilchen aus Graphitteilchen oder Stärketeilchen bestehen und Größen in dem Bereich von 0,1 - 100 µm, bevorzugt 0,3 - 50 µm, wie etwa 0,5 - 10 µm aufweisen.

7. Verfahren gemäß einem der vorhergehenden Ansprüche, das weiter Vorsintern des Substrats zum Bilden der ersten Porosität umfasst.

8. Verfahren gemäß einem der vorhergehenden Ansprüche, wobei die Flüssigkeitsteilchen eine Emulsion, wie etwa eine Acrylpolymeremulsion mit Flüssigkeitspartikeln, die in dem zweiten Schritt ausgetrieben werden, umfasst.

9. Verfahren gemäß Anspruch 1, **dadurch gekennzeichnet, dass** das Substrat vorgesintert wird um die erste Porosität zu bilden und dass Teilchen aus Zirkoniumoxid, Aluminiumoxid oder Hydroxyapatit in die Dispersion gemischt werden und eine solche Größe aufweisen, dass die Porosität nach dem Sintern bleibt.

10. Verfahren gemäß einem der vorhergehenden Ansprüche, das weiter umfasst Aufbringen der Dispersion auf die Oberfläche des Substrats mittels eines Verfahrens, das in der Gruppe: Tropfen, Sprühen und Eintauchen eingeschlossen ist.

11. Verfahren gemäß einem der vorhergehenden Ansprüche, wobei die viskose Flüssigkeit Wasser oder Alkohol ist.

12. Anordnung für eine Dentalinstallation, zum Beispiel ein Implantat, Abstandshalter/Abstandshalterhülse, Krone usw., vollständig oder teilweise aus einem keramischen Substrat hergestellt, wobei das Substrat, mindestens an einem Teil, der eine Oberfläche trägt, eine erste Porenbildung mit einer ersten Porosität umfasst, **dadurch gekennzeichnet, dass** die Oberfläche (1a) eine gesinterte Keramikschicht (2) umfasst, die Keramikteilchen (10) umfasst, und mit einer zweiten Porosität, die größere Poren als in der ersten Porosität aufweist.

13. Anordnung gemäß Anspruch 12, **dadurch gekennzeichnet, dass** die Keramikschicht (2) Teilchen aus Zirkoniumoxid, Aluminiumoxid oder Hydroxyapatit umfasst.

14. Anordnung gemäß Anspruch 12 oder 13, **dadurch gekennzeichnet, dass** die Keramikteilchen (10) eine Größe aufweisen, die größer ist als die Porosität des Substrats.

15. Anordnung gemäß Anspruch 13 oder 13, **dadurch gekennzeichnet, dass** die Keramikteilchen (10) Zirkoniumteilchen mit einer mittleren Teilchengröße von 0,3 µm sind.

16. Anordnung gemäß Anspruch 15, **dadurch gekennzeichnet, dass** die Dicke der Schicht (2) zirka 20 µm ist.

17. Anordnung gemäß Anspruch 12, **dadurch gekennzeichnet, dass** die Keramikteilchen (12) Zirkoniumteilchen mit einer Teilchengröße von zwischen 7 und 10 µm sind.

18. Anordnung gemäß Anspruch 17, **dadurch gekennzeichnet, dass** die Dicke der Schicht (2) ca. 40 µm ist.

## Revendications

1. Procédé pour former une unité (1) pour une installation dentaire, par exemple un implant, un dispositif d'espacement, une couronne, comprenant les étapes consistant à :
prévoir un substrat en céramique, ayant au moins une partie supportant une surface (1a) prévue avec une première formation de pore ayant une première porosité (3),
appliquer une dispersion (4) comprenant un liquide visqueux, des particules de céramique (10) et des particules de matériau (12) et/ou des particules de liquide sur la surface, ledit liquide visqueux ayant la capacité d'être aspiré par la force capillaire dans la première formation de pore ou de sécher afin de former une couche de céramique (2) avec une deuxième porosité ayant de plus grandes pores que dans la première porosité (3),
retenir, lors d'une première étape, sur la surface, lesdites particules de matériau et/ou de liquide qui ont une taille de sorte qu'elles ne peuvent pas pénétrer dans la première formation de pore et qui contribuent à la construction continue de la couche de céramique (2),
fritter le substrat, dans une seconde étape, moyennant quoi les particules formant finalement la couche sont maintenues ensemble avec des espaces intermédiaires qui se composent de ou sont inclus dans la deuxième porosité, et
éloigner lesdites particules de matériau et/ou de liquide pendant le frittage.

2. Procédé selon la revendication 1, dans lequel les particules de céramique (10) sont du même type que le substrat.

3. Procédé selon la revendication 1 ou 2, dans lequel les particules ont une taille ou forme déterminant la deuxième porosité et sont insolubles dans le liquide visqueux.

4. Procédé selon la revendication 3, dans lequel les particules de matériau sont dispersibles dans le liquide avec ou sans dispersant, moyennant quoi les particules sont éloignées au moyen d'une fonction de retrait, comprenant au moins l'une parmi : la combustion dans un four ; la gravure ; le lessivage ; la fusion ; la sublimation et/ou la dissolution.

5. Procédé selon l'une quelconque des revendications précédentes, dans lequel le substrat (1) est fritté au préalable afin de former la première porosité, et en ce que les particules de céramique (10) comprennent au moins l'une parmi : la zircone, l'alumine et l'hydroxyapatite et les particules de céramique ont des tailles de l'ordre de 0,1-1,0 µm, de préférence 0,2-0,6 µm.

6. Procédé selon l'une quelconque des revendications précédentes, dans lequel les particules de matériau se composent de particules de graphite ou de particules d'amidon et ont des tailles de l'ordre de 0,1-100 µm, de préférence 0,3-50 µm, telle que 0,5-10 µm.

7. Procédé selon l'une quelconque des revendications précédentes, comprenant en outre l'étape consistant à fritter au préalable le substrat afin de former la première porosité.

8. Procédé selon l'une quelconque des revendications précédentes, dans lequel lesdites particules de liquide comprennent une émulsion, telle qu'une émulsion de polymère acrylique avec des particules de liquide, qui sont éloignées dans ladite seconde étape.

9. Procédé selon la revendication 1, **caractérisé en ce que** le substrat est fritté au préalable pour former la première porosité, et **en ce que** les particules de zircone, d'alumine ou d'hydroxyapatite sont mélangées dans la dispersion et ont une taille de sorte que la porosité reste après le frittage.

10. Procédé selon l'une quelconque des revendications précédentes, comprenant en outre l'étape consistant à :
appliquer ladite dispersion sur la surface du substrat au moyen d'un procédé compris dans le groupe :
l'égouttage, la pulvérisation et l'immersion.

11. Procédé selon l'une quelconque des revendications précédentes, dans lequel le liquide visqueux est de l'eau ou de l'alcool.

12. Agencement pour une installation dentaire, par exemple un implant, un dispositif d'espacement / manchon de dispositif d'espacement, une couronne, etc., réalisé complètement ou partiellement avec un substrat en céramique, dans lequel le substrat, au moins au niveau d'une partie supportant une surface, comprend une première formation de pore ayant une première porosité, **caractérisé en ce que** la surface (1a) comprend une couche en céramique frittée (2) comprenant des particules de céramique (10) et avec une deuxième porosité ayant de plus grandes pores que dans la première porosité.

13. Agencement selon la revendication 12, **caractérisé en ce que** la couche de céramique (2) comprend des particules de zircone, alumine ou hydroxyapatite.

14. Agencement selon la revendication 12 ou 13, **caractérisé en ce que** les particules de céramique (10) ont une taille qui est plus grande que la porosité du substrat.

15. Agencement selon la revendication 12 ou 13, **caractérisé en ce que** les particules de céramique (10) sont des particules de zircone ayant une taille particulaire moyenne de 0,3 µm.

16. Agencement selon la revendication 15, **caractérisé en ce que** l'épaisseur de la couche (2) est d'environ 20 µm.

17. Agencement selon la revendication 12, **caractérisé en ce que** les particules de céramique (12) sont des particules de zircone ayant une taille particulaire comprise entre 7 et 10 µm.

18. Agencement selon la revendication 17, **caractérisé en ce que** l'épaisseur de la couche (2) est d'environ 40 µm.
